(19) Europäisches Patentamt
European Patent Office
Office européen des brevets

(11) EP 1 429 490 B1

(12) **EUROPEAN PATENT SPECIFICATION**

(45) Date of publication and mention of the grant of the patent:
**02.08.2006 Bulletin 2006/31**

(51) Int Cl.:
***H04L 12/26*** *(2006.01)*

(21) Application number: **02027399.1**

(22) Date of filing: **09.12.2002**

(54) **Round trip time estimation method and device in an acknowledgement-based packet transmission system**

Umlaufzeitabschätzungsverfahren und Einrichtung mittels Rückquittierung in einem Paketübertragungssystem

Procédé d'estimation du temps de propagation aller-retour et dispositif dans un système de transmission de paquets basé sur des acquittements

(84) Designated Contracting States:
**DE FR GB IT**

(43) Date of publication of application:
**16.06.2004 Bulletin 2004/25**

(73) Proprietor: **Tektronix International Sales GmbH**
**8212 Neuhausen (CH)**

(72) Inventors:
- **Bovo, Antonio**
  **35127 Padova (IT)**
- **Rizzi, Edoardo**
  **38022 Cavizzana (Trento) (IT)**
- **Martello, Luca**
  **45011 Adria (Rovigo) (IT)**
- **Tittoto, Ronny**
  **31010 Pademo del Grappa (Treviso) (IT)**
- **Bertocco,Matteo**
  **35027 Noventa Padovana(Padova) (IT)**
- **Narduzzi,Claudio**
  **30035 Mirano (venezia) (IT)**
- **Biasutto, Alessio**
  **30172 Mestre (venezia) (IT)**

(74) Representative: **Schurack, Eduard F. et al**
**Hofstetter, Schurack & Skora**
**Balanstrasse 57**
**81541 München (DE)**

(56) References cited:
**EP-A- 1 206 067** **US-A1- 2002 174 216**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 429 490 B1

## Description

The present invention relates to a method for a non-invasive estimation of the round trip time in a packet-oriented acknowledge-based transmission system, with a probe monitoring the signals transmitted between a sender and a receiver. Furthermore, it relates to a device designed to carry out such method.

Nowadays, the TCP/IP (Transmission Control Protocol/Internet Protocol), which is the most popular protocol using such characteristic, is used extensively in every Intranet and Internet network -see also US 2002/0174216 A1. With the new wireless networks, especially the 2,5G and 3G generations, TCP/IP is going to be the protocol most used worldwide in the telecommunications environments. Besides this, TCP/IP should substitute also other protocols largely used in telecommunications infrastructures, so far. However, this largest usage of TCP/IP requires the introduction of new measurement processes to characterize the behaviour of this protocol and the quality of service (QoS) offered by the applications using it. Some characteristics of this protocol, in fact, should have an impact on the different applications using TCP/IP. A very important parameter is the socalled round trip time (RTT) that gives a measure of the delay perceived by the user or application sending a packet and receiving a response for it. This parameter is very influenced by problems as queuing delays in the network, erroneous dimensioning or configuration of part of the network, bottlenecks, and so on.

TCP/IP is a protocol that allows reliable data transfer between two terminal hosts. In order to provide reliability, packets that reach correctly the receiver are acknowledged and the sender is informed of a correct delivery. The time that elapses between the sending of a packet and the response provided by the acknowledgement is defined as the mentioned RTT. Typically RTT is a measure of "how far" is the receiver from the sender and gives good information regarding network behaviour and quality perceived by customers. Starting from the previous common RTT definition it is clear that its evaluation could be performed easily at sender side but this point of measure is normally outside the scope of a network operator.

Figure 1 shows a graphic (upper part) for an easier understanding of what is meant with RTT. As shown in this Figure, TCP/IP packets travel from sender 10 to receiver 12, see arrow 14, and the related acknowledgements, see arrow 16, follow the inverse path.

In order to provide better throughput, TCP/IP implements a sliding-window transmission algorithm. The sender periodically evaluates a value called congestion window (*cwnd*). This parameter represents the number of packets transmitted and not already acknowledged. Its value is limited to the advertised window (*advwnd*) which represents the maximum buffer size utilized by the receiver.

GPRS networks, as an mobile example for a TCP/IP network, for their nature are more sensitive to RTT than current Internet networks. This is due to the impact of the radio path on the total TCP/IP path and on the inter-working of IP environment with telecommunications switch environment. Figure 2 shows the typical structure of a GPRS network and the SGSN can be defined as the front end between the IP protocols and the traditional telecommunications protocols, even if TCP/IP is used in transparent way from the sender to the receiver (Internet server to the GPRS mobile).

GPRS networks provide new access to services over the Internet Protocol (IP) suite. In order to evaluate the quality perceived by customers, mobile operators perform a continuous monitoring of the involved devices and lines. Moreover, customers can access different services not necessarily related to the mobile operator itself. For these reasons SLAs (*Service Level Agreements*) are stipulated between different network owners and a continuous monitoring of network behaviour permits to ensure the respect of such agreements. Therefore, a mobile operator has to be able to perform RTT measures and separate delays due to its network and to external ones.

If it is possible to monitor TCP traffic at the sender side, RTT evaluation is a simple task. In this case, RTT can be estimated calculating the time elapsed between sending a packet and receiving the correspondent acknowledgment. Usually TCP senders evaluate RTT using this simple technique in order to compute the Retransmission Time Out (RTO, see RFC723 p. 41).

This technique has some advantages namely it is easy to implement and a non-invasive implementation can be realized at the sender side. Its disadvantages are that it can only be applied at the sender side and measurements cannot be performed in presence of high rates of packet loss. An invasive measure such as socalled ping uses the same technique. This latter solution is well known and widely used in the Internet and other IP networks. Anyway, it cannot be implemented in order to evaluate network response times perceived by single customers. This is related to the fact that packets used by ping are typically smaller than the ones used in data transfers. Moreover, ping does not use TCP but ICMP protocol.

In order to perform an RTT evaluation in an intermediate point another known technique is based on TCP SYN and SYN acknowledgement measurement. This technique evaluates the time delay between particular TCP messages occurring only in certain cases in a TCP connection to setup the connection itself. This solution has advantages of simplicity, it is able to perform RTT evaluation in a non invasive manner and it can perform RTT evaluation in any intermediate point.

The disadvantages are that it cannot perform a continuous monitoring of network performances, it is not possible to track RTT variation during a single connection; the single evaluation is performed monitoring small packets smaller than the ones involved during data transfer and the sender delay is included in the RTT estimation.

The task of the present invention is therefore to provide a method that allows a continuous monitoring of network performances, especially a continuous monitoring during a single connection. A further aspect of the present invention is to provide a method that allows to track RTT variation during a single connection. It is also a task of the present invention to provide a corresponding device designed to carry out a method according to the invention.

This task is solved by a method having the features of patent claim 1 and a device according to claim 18.

The present method can deliver mean values of RTT for groups of packets during a single connection providing continuous monitoring and following possible variations due to network congestion and radio link delay variations. The advantages of the invention are: it can perform RTT evaluation in a non invasive manner, it can perform RTT evaluation in any intermediate point, it allows to perform RTT at receiver side; it can track RTT variations during a connection and it can track congestion window variation during a connection. The method according to the invention evaluates the RTT analysing a group of acknowledgements and their corresponding transmitted packets, instead of analysing a single acknowledgement and its corresponding packet. In more detail, the correlation between the acknowledgements and their packets is done looking forward and backward in time. In fact, acknowledgements are sent by receivers as soon as packets are delivered; on the other hand, packets are sent by transmitters after an acknowledgement has arrived. The total RTT is defined by the sum of two different components: the round trip time probe-receiver, RTTpr, and the round trip time probe-sender, RTTps. For a certain group of acknowledgements, the method according to the invention evaluates RTTpr considering the corresponding packets backward in time. In a similar way RTTps is obtained looking forward in time.

The present invention will be described with regard to TCP/IP connections. However, for a man skilled in the art, it is obvious that it can also be used on different packet oriented transmission systems with acknowledgement.

The method according to the invention works well in ordinary IP networks and more complex networks such as GPRS and UMTS networks. As an example, such method can be applied on monitoring traffic at typical GPRS interfaces such as Gi, Gb and Gn (see Figure 2).

The developed algorithm uses packet and acknowledgement traces related to a single connection. It evaluates a mean RTT for each group of acknowledgements. It has been tested in different conditions and with a wide range of TCP implementations, e.g. TCP Reno, Tahoe, New Reno and SACK. It has also been tested using 2,5G wireless traffic.

In an advantageous embodiment in step a1) the period of time of the packets, of which period the timestamps are used for comparison, is defined by the point in time of the earliest acknowledgement of the number of acknowledgements minus a maximum round trip time (RTTmax). In an advantageous manner in step a2) the period of time of the packets, of which period the time stamps are used for comparison, is defined by the point in time of the earliest acknowledgement of the number of acknowledgements plus the time period of the acknowledgements (Wack) plus a maximum round trip time (RTTmax). This results in the advantage that due to time restriction in both directions the processing time can be reduced.

In a further advantageous embodiment the time interval considered in steps a1) or a2) is grouped into n discrete points in time which are spaced apart with a resolution (ris) and perform the following calculation: First, the packet hast to be found which is nearest in time to the acknowledgement for a first acknowledgement present in the time interval. Then, the difference in time, especially the absolute value of this difference, between this acknowledgement and the corresponding nearest packet is calculated. This has to be done all acknowledgements in the time interval. Then the mean difference in time, or a value correlated therewith has to be created. In the following, the timestamps of the considered acknowledgements are moved increasing or decreasing them with the resolution step (ris) and then, the first three steps are repeated until any of the moved timestamps of the acknowledgements contained in the time interval (Wack) reaches the end of the time interval considered in steps a1) or a2). Finally, it has to be searched for the point in time (t1 = i1 * ris) for which the mean difference in time or the value correlated therewith has become minimum.

This modification of the method according to the invention is based on the assumption that by means of the acknowledgements received at sender side, packets have been released.

Further, it is preferred that the time interval considered is the time period between the point in time of the earliest acknowledgement and the point in time of the earliest acknowledgement plus the maximum round trip time plus the time interval in which the acknowledgements are located, and the round trip time probe-sender (RTTps) is calculated according to: RTTps = i1 * ris.

Furthermore, for the calculation of the round trip time probe-receiver the time interval considered is the time period between the point in time of the earliest acknowledgement and the point in time of the earliest acknowledgement minus the maximum round trip time, whereby the round trip time probe-receiver (RTTpr) is calculated according to RTTpr = i1 * ris.

With respect to the procedure stated so far, there is a danger that several spurious minimums are detected. For this reason, it is advantageous to use other information contained in the packets to obtain even better performance. One of those ways comprises the following steps: first of all, the sequence numbers of the packets and the sequence numbers of the acknowledgements are determined and the following calculation is performed: First, the packet which is nearest in time to the acknowledgement for a first acknowledgement has to be found. Then, the difference between the sequence number of this acknowledgement and the sequence number of the corresponding nearest packet, especially the absolute value of this difference, has to be calculated. This has to be done for all acknowledgements in the time interval (Wack). Then, the mean difference of the sequence numbers or a value correlated therewith has to be created. As a next step, the timestamps of the considered acknowledgements have to be moved increasing or decreasing them with the resolution step (ris) and the mentioned steps have to be repeated until any of the moved timestamps of the acknowledgements contained in the time interval (Wack) reaches the end of the time interval considered in steps a1) or a2). Finally, it has to be searched for the point in time (t2 = i2 * ris) for which the mean difference of the sequence numbers or the value correlated therewith has become minimum. Using this embodiment the estimated sliding window may be considered when creating the difference.

A further important contribution of the present invention is to find appropriate limitations for the sliding window. The lower limit for the estimated sliding window may be the apparent window, whereby the apparent window corresponds to the number of packets for which an acknowledgement has not yet been monitored at the probe. Whenever a packet loss is detected the lower limit for the estimated sliding window may be set to 1 packet.

The estimated sliding window may be calculated when a packet loss is detected: cwnd(t+1) = cwnd(t)/2, whereby cwnd(t) is the estimated sliding window at time t. In the case of receiving acknowledgements with new sequence numbers the estimated sliding window may be calculated as follows: cwnd(t+1)=cwnd(t) + 1/cwnd(t), whereby cwnd(t) is the estimated sliding window at time t.

In case that the above-mentioned two equations result in a higher value than for the advertised window, the upper limit for the estimated sliding window is clipped to the advertised window, whereby the advertised window may be preset as a configuration parameter.

It is advantageous to double the sliding window for every acknowledgement received at the beginning of a connection. Such doubling takes place until the first packet loss is detected.

To combine the two results of the course of the mean difference in time and the course of the mean difference of the sequence numbers it is preferred to carry out the following for both the time period before and the time period after the point in time of the earliest acknowledgement received by the probe: First, the minima of the course of the mean difference of the sequence numbers is determined. Then, the minima of the temporal course of the mean difference in time are determined at least in the proximity of the minima of the course of the mean difference of the sequence numbers. Finally, a point in time Minleft before and a point in time Minright after the point in time (t*) of the earliest acknowledgement received by the probe are determined, and for which the minimum of the mean difference in time is nearest to the minimum of the mean difference of the sequence numbers. Using that, the round trip time probe-sender (RTTps) and the round trip time probe-receiver (RTTpr) are determined according to: RTTps = Minright - t*, RTTpr = t* - Minleft.

It is obvious to a man skilled in the art that the above-referenced features and advantages may easily obtained also by a device which is designed to carry out those methods of the present invention. Especially, it is obvious for a man skilled in the art, how the algorithm described below may be formulated in software and run on a processor. The hardware for the probe is also well know in the art. In the following, embodiments of the present invention will be described with reference to the drawings attached. They show:

- Fig. 1 a diagram for defining the round trip time (RTT) and components involved;
- Fig. 2 a diagram of an GPRS application and possible locations for monitoring probes;
- Fig. 3 on the left side a timeline diagram and on the right side an extract of the time line diagram on the left;
- Fig.4 a diagram explaining that the method considers a small set of acknowledgements which are compared with previous packets captured to find the round trip time probe-receiver, and with future packets to find the round trip time probe-sender;
- Fig. 5 a diagram for explaining the timestamp distance computation;
- Fig. 6 a block diagram indicating the complete method using the mean difference in time and the mean difference of the sequence numbers for the evaluation of the round trip time;
- Fig. 7 a diagram showing the validation of two minimums of the timely course of the mean difference in time by two minima of the course of the mean difference of the sequence numbers; and
- Fig. 8 a block diagram showing the estimation of the sliding window.

The upper half of Figure 1 shows the RTT evaluation according to the prior art. The lower half shows the way as it is done by the invention: a probe 18 is connected to a point of measure inside the network which may be any intermediate accessible point such as gateways or typical network interfaces. Therefore, the determination of the RTT according to the invention is performed in two steps, namely by determining the RTT probe-receiver (RTTpr) and the RTT probe-sender (RTTps) which are then to be added to determine the entire RTT. Figure 2 shows examples for the location of a probe to perform the method according to the invention by way of example of a GPRS network: preferred locations for the probe are the Gi-interface, the Gn-interface and the Gb-interface.

Single TCP connections can be described through timeline diagrams like the one shown in Figure 3. Time increases down the Figure and the left side and right side vertical lines represent respectively the sender and the receiver involved in the connection. TCP packets transmitted from sender to receiver are shown in thick arrows, acknowledgements are depicted in dashed arrows and go from the receiver to the sender.

As shown in Figure 3 in the method according to the present invention a TCP connection is probed in an intermediate point where captured packets and acknowledgements travel respectively later and sooner than at the sender side. In other words, a packet starts from the sender at time $t_1$ then it passes at probe at time $t'_1$. When at time $t_2$ it reaches the receiver, automatically an acknowledgement starts. At time $t'_2$, the acknowledgement is observed at the probe and later on it reaches the sender at time $t_3$. Obviously it will allow the sender to free new packets depending on the congestion window currently in use, according to the TCP sliding window mechanism, assuming the sender always is filled with packets to be sent.

RTT is equal to $t_3$ - $t_1$ and it can be evaluated at the probe only estimating $t'_2$- $t'_1$ and $t'_3$- $t'_2$ that represent respectively the RTTpr and RTTps. As shown in Figure 3, $t'_1$, $t'_2$ and $t'_3$ are the timestamps observed at the probe. The problem to solve is to find the correct sequence of packet, acknowledgement and new packet, regardless of the sliding window algorithm implemented by the TCP sender. In fact, other packets, of the same connection, flow between sender and receiver during the analysis (see Figure 3).

The RTTpr is evaluated by means of two separated techniques:

- Timestamps (capture time at the probe) of a small group of acknowledgements (say 4 or 5) are "moved" back in time in order to find the time sequence of packets that released them at the receiver. This operation is done by means of a distance function performed along the time series.
- Sequence numbers of the same group of acknowledgements are compared with the packets encountered during the described operation in order to perform a distance function along the sequence numbers themselves.

The RTTps is evaluated in a similar way searching which packets have been released at the sender by the acknowledgements considered. In this case a direct correspondence between sequence numbers doesn’t exist and a congestion window estimator has been realised in order to find it out. For protocols, that do not use variable congestion windows or something comparable, the method according to the invention works well as described until that point. However, further improvement may be achieved for protocols that use variable congestion windows by the measures described below:

In TCP connections acknowledgements are generated by the arrival of packets and packets are freed by the arrival of acknowledgements. First the timestamp procedure tries to find the most probable sequence of packets that has generated the group of acknowledgements considered. In this way the RTTpr is evaluated. Then the same procedure tries to find the packets that have been released by the group of acknowledgements considered, namely RTTps.

As already stated the algorithm performs a mean RTT evaluation for each group of subsequent acknowledgements, called "Wack" captured at the probe. Typically these groups must contain enough acknowledgements to validate the response. RTT is not stable during a TCP connection and it represents the degree of congestion experimented by the sender and the receiver. In order to get better results and not to fail the measurement procedure, the algorithm cannot consider too many acknowledgements for each mean RTT evaluation. In order to resolve these problems a trade-off has been found analysing real data tracks and finding optimal working values. The algorithm performs each RTT evaluation considering a small time-window containing a few acknowledgments. In a preferred embodiment the number of acknowledgements considered was more than 4 and less than 7. The time-window can be chosen and in a preferred embodiment a typical value was 2 seconds. A maximum RTT for both directions should be given in order to optimise performances. In a preferred embodiment the worst case value for RTTmax was 5 seconds.

Figure 4 shows the course in time of the packets (PKT) and the course in time of the acknowledgements (ACK). The first acknowledgement considered has been received at the probe at time t*. Then, the algorithm considers the packets arrived in time before and after t* for this group of acknowledgements. To limit the number of packets to be analyzed, the interval has been limited to [t*-RTTmax; t*+RTTmax+Wack].

Considering the acknowledgements associated to a Wack at time t*, see Figure 5, their timestamps are compared with the timestamps of packets between t*-RTTmax and t*+RTTmax+Wack. Several distances are computed in this interval "moving" Wack with a resolution step ris.

It is important to notice that the left side of Figure 5 corresponds to the probe-receiver segment and the right side refers to the probe-sender section. "Moving" Wack from left to right means to add an offset to each timestamp of the acknowledgements considered.

In order to simplify the algorithm description the interval [t*; t*+RTTmax+Wack] is considered. In this time interval the RTTps is evaluated.

To determine the time RTTps it has to be found which packets have been released by the acknowledgements contained in Wack. This research is performed with a resolution step ris moving the timestamps of the considered acknowledgements from $\dot{t}$ to $\dot{t}$+RTTmax+Wack. At the *i*-th iteration the used timestamp for the *n*-th acknowledgement will be:

```
t_moved_ack(n)= t_ack(n) + i * ris
```

where n is the acknowledgement considered, t_ack(n) is its timestamp, t_moved_ack (n) is the "moved" value and i is the index accounting the iteration.

For each iteration i, the algorithm computes the mean timestamp distance between the "moved" acknowledgements of Wack and the nearest packets. In pseudo-code these operations are:

```
For i = 0 to N = round(RTTmax / ris) {

      For n = 1 to N_ack{

        - Find the packet nearest to t_moved_ack(n);
        - Compute dt(n) as the absolute value of the difference
          between the timestamp of that packet and
          t_moved_ack(n);
      }

      DT(i) = sqrt (sum( square(dt(n))) )/N_ack
}.
```

where N_ack is the number of acknowledgements in Wack. The first "for...to"-loop means "for every resolution step", while the second "for...to"-loop means "for every acknowledgement".

In order to avoid computation load one could leave away the sqrt-function, since the Minimum of DT(i) is the same as the Minimum of sqrt(DT(i)). However, for an easier understanding it has been left in this equation as well as in corresponding equations which will follow below.

After all iterations have been completed, DT (i) contains the mean timestamps distances for each i. If it is possible to find an $i_1$ such that DT ($i_1$) is smaller than the DT (i) 's for all other i's, one can state that:

$$RTTps = i_1 * ris$$

RTTpr can be evaluated in the same manner considering the time interval [$\dot{t}$-RTTmax; $\dot{t}$]. Obviously, indices have to be slightly changed in order to search the packets that released the acknowledgements under analysis.

As described in the previous section, RTTps and RTTpr are obtained searching the minimum values for DT (i). Typically DT (i) has several spurious minimums. For this reason other information contained in packets has been used to obtain better performance:

In practice an acknowledgement has a sequence number obtained directly from the packet sequence number and the packet size. For a sake of simplicity here a direct correspondence may be considered, namely that acknowledgements generated by packets arrived at receiver side have the same sequence numbers as the packets that have generated them.

For this reason a second distance can be evaluated along those values. Considering the pseudo-code of the previous section a new distance is added:

```
For n = 1 to N_ack{

 - Find the packet nearest to t_moved_ack(n);
 - Compute dt(n) [SEE PREVIOUS SECTION]
 - Compute ds(n) as the absolute value of the difference
   between the sequence number of that packet and se-
   quence number of the acknowledgement considered;
}
 DS(i) = sqrt (sum( square(ds(n))))/N_ack
```

This operation can be performed directly considering the left-side of Figure 5. In fact, in order to evaluate RTTpr it is necessary to find acknowledgements and packets with the same sequence numbers.

Unfortunately the relationship between the sequence numbers of the considered acknowledgements and the sequence numbers of packets released at sender side is related to the congestion window used by the TCP sender (right-side of Figure 5). In this case a congestion window estimator has been realised and the estimated value has been used as offset for the acknowledgements. In pseudo-code this results in:

Compute the congestion Window for Wack.

```
For n = 1 to N_ack{

 - Find the packet nearest to t_moved_ack(n);
 - Compute dt(n) [SEE PREVIOUS SECTION]
 - Compute ds(n) as the absolute value of the difference
   between the sequence number of that packet and se-
   quence number of the acknowledgement considered plus
   the congestion window estimated;
}

DS(i) = sqrt(sum( square(ds(n))))/N_ack
```

In order to estimate RTTps correctly this procedure must be implemented for the right-side.

The following is concerned with the estimation of a congestion window: A TCP sender continuously adapts its congestion window as a function of network congestion. As already stated, cwnd represents the number of packets not already acknowledged by the receiver and its upper bound is regulated by the advertised window (*advwnd*).

This sliding-window solution implemented by standard TCP improves throughput but has to be adaptive in order to meet network congestion status. Different implementations of TCP senders try to adapt the congestion window using different techniques. Basically acknowledgements give information regarding packet loss and delay along the network. Using this information different adaptation rules are implemented.

The realized estimator tracks packets and acknowledgements in an intermediate point. In this case it can easily evaluate the number of packets not already acknowledged at the probe-receiver side. This number, called *apparent window*, is used as a minimum value for the congestion window estimated. In case of packet loss its value could overcome the real congestion window. For this reason this lower bound cannot always be used.

The estimator follows simple rules of increasing and decreasing of the window and must track the whole connection. A simple version containing the fundamental steps is described in the following:

```
For all acknowledgements {
     If the considered acknowledgement identifies a packet
     loss:

          Then  [MD phase]
               cwnd(t+1) = cwnd(t)/2

          else  [AI phase]
               cwnd(t+1) = cwnd(t) + 1/cwnd(t)
}
```

where the MD phase (Multiplicative Decrease) is applied when packet loss is occurring and the AI phase (Additive Increase) is performed when acknowledgements with new sequence numbers are received.

The simple algorithm described here is just a simplified version introduced to explain the main blocks implemented. In order to solve some problems related to different TCP implementations and different link behaviors, some additional blocks have been added. A complete scheme of the real algorithm is shown in Figure 8. As it can be noticed, all estimated values are clipped to the advertised window, the maximum allowable value. Another minimum value for the congestion window, *minwind*, is also used in case of packet loss (duplicate ack detected). Typically *minwind* is set to 1 and it has been inserted in order to clip estimated values to a correct lower bound. At the beginning of a connection the estimator starts doubling the congestion window for each acknowledgement received (Slow Start Block) instead of executing the AI phase. This modification allows a closer estimation of the *cwnd* during the beginning of the connection. In fact in this case the sender increases rapidly its congestion window using the slow start algorithm (see RFCs). As already stated, the limit provided by the apparent window is not always reliable. Hence, its value is used only if it is not too far from the estimated value obtained (see the block inserted after the AI phase and the Slow start).

Mean RTT for the acknowledgements contained in Wack is evaluated calculating DT and DS on both directions. The estimated congestion window is used to calculate DS for the probe-sender side. Finally two minimums for DT are searched in order to obtain RTTpr and RTTps. Correct minimum positions for DT are obtained analysing DS. Figure 6 depicts the complete algorithm that can be iterated in order to track RTT during a complete TCP connection. Figure 7 shows an example of how DT minimums are validated using DS.

As a conclusion, the proposed algorithm can perform continuous monitoring of RTT and Congestion Window of TCP/IP connections. As an example, the application to GPRS traffic has been briefly described. In this case possible access points are intermediate interfaces such as *Gi, Gn* and *Gb*.

The described embodiment performs distances along timestamps and sequence numbers. Hence, it needs part of the information contained in TCP headers of acknowledgements and packets.

The above describes the principles of the complete algorithm of an preferred embodiment of the present invention. The method allows the continuous RTT evaluation from TCP/IP traffic captured in an intermediate point. It can also be implemented at the receiver side and in both cases it gives information regarding network performances.

## Claims

**1.** Method for the non-invasive estimation of the round trip time (RTT) in a packet oriented acknowledge-based transmission system, by means of a probe monitoring the signals transmitted between a sender and a receiver comprising the following steps:

a) for a presetable number of subsequent acknowledgements within a time interval (Wack)

a1) comparing the timestamps of the sequence of acknowledgements with the timestamps of the packets received by the probe before the acknowledgements to determine an estimated value for the round trip time probe-receiver. (RTTpr);

a2) comparing the timestamps of the sequence of acknowledgements with the timestamps of the packets received by the probe after the acknowledgements to determine an estimated value for the round trip time probe-sender (RTTps);

b) Adding the estimated values for the round trip time probe-receiver and the round trip time probe-sender for determination of an estimated value for the round trip time (RTT).

**2.** Method according to claim 1,
**characterized in that**
in step a1) the period of time of the packets, of which period the timestamps are used for comparison, is defined by the point in time of the earliest acknowledgement of the number of acknowledgements minus a maximum round trip time (RTTmax).

**3.** Method according to claim 1 or 2,
**characterized in that**
in step a2) the period of time of the packets, of which period the time stamps are used for comparison, is defined by the point in time of the earliest acknowledgement of the number of acknowledgements plus the time period of the acknowledgements (Wack) plus a maximum round trip time (RTTmax).

**4.** Method according to claim 2 or 3,
**characterized in that**
the time interval considered in steps a1) or a2) is grouped into n discrete points in time which are spaced apart with a resolution (ris) and perform the following calculation:

c1 find the packet which is nearest in time to the acknowledgement for a first acknowledgement present in the time interval;
c2 calculate the difference in time, especially the absolute value of this difference, between this acknowledgement and the corresponding nearest packet;
c3 do this for all acknowledgements in the time interval and create the mean difference in time, or a value correlated therewith;
c4 move the timestamps of the considered acknowledgements increasing or decreasing them with the resolution step (ris) and repeat steps c1 to c3 until any of the moved timestamps of the acknowledgements contained in the time interval (Wack) reaches the end of the time interval considered in steps a1) or a2);
c5 search for the point in time (t1 = i1 * ris) for which the mean difference in time or the value correlated therewith has become minimum.

**5.** Method according to claim 4
**characterized in that**
the time interval considered is the time period between the point in time of the earliest acknowledgement (t*) and the point in time of the earliest acknowledgement (t*) plus the maximum round trip time (RTTmax) plus the time interval (Wack), in which the acknowledgements are located, and the round trip time probe-sender (RTTps) is calculated according to: RTTps = i1 * ris.

**6.** Method according to claim 4 or 5,
**characterized in that**
the time interval considered is the time period between the point in time of the earliest acknowledgement (t*) and the point in time of the earliest acknowledgement (t*) minus the maximum round trip time (RTTmax), and the round trip time probe-receiver (RTTpr) is calculated according to:

$$RTTpr = i1 * ris.$$

**7.** Method according to one of claims 4 to 6,
**characterized in that**
it furthermore comprises the following steps:

- determine the sequence numbers of the packets and the sequence numbers of the acknowledgements and furthermore perform the following calculation:

d1 find the packet which is nearest in time to the acknowledgement for a first acknowledgement;
d2 calculate the difference between the sequence number of this acknowledgement and the sequence number of the corresponding nearest packet, especially the absolute value of this difference;
d3 do this for all acknowledgements in the time interval (Wack) and create the mean difference of the sequence numbers or a value correlated therewith;
d4 move the timestamps of the considered acknowledgements increasing or decreasing them with the resolution step (ris) and repeat steps d1 to d3 until any of the moved timestamps of the acknowledgements contained in the time interval (Wack) reaches the end of the time interval considered in steps a1) or a2);
d5 search for the point in time (t2 = i2 * ris) for which the mean difference of the sequence numbers or a value correlated therewith has become minimum.

**8.** Method according to claim 7,
**characterized in that**
when creating the difference the estimated sliding window is considered.

**9.** Method according to claim 8,
**characterized in that**
the lower limit for the estimated sliding window is the apparent window, whereby the apparent window corresponds to the number of packets for which an acknowledgement has not yet been monitored at the probe.

**10.** Method according to claim 8,
**characterized in that**
the lower limit for the estimated sliding window is set to 1 packet, especially if a packet loss is detected.

**11.** Method according to one of claims 8 to 10,
**characterized in that**
the estimated sliding window is calculated as follows in case of a packet loss:

$$cwnd(t+1) = cwnd(t)/2$$

whereby cwnd(t) is the estimated sliding window at time t.

**12.** Method according to one of claims 8 to 11,
**characterized in that**
the estimated sliding window in the case of receiving acknowledgements with new sequence numbers is calculated as follows:

$$cwnd(t+1)=cwnd(t) + 1/cwnd(t)$$

whereby cwnd(t) is the estimated sliding window at time t.

**13.** Method according to one of claims 11 or 12,
**characterized in that**
the estimated sliding window is clipped to the advertised window, in case that the equation according to claim 10 or 11 results in a higher value than for the advertised window, whereby the advertised window may be preset as a configuration parameter.

**14.** Method according to one of claims 8 to 13,
**characterized in that**
at the beginning of a connection the sliding window is doubled for every acknowledgement received.

**15.** Method according to claim 14,
**characterized in that**

the doubling takes place until packet loss is detected.

**16.** Method according to one of the preceding claims,
**characterized in that**
the following steps are carried out for both the time period before and the time period after the point in time of the earliest acknowledgement received by the probe:

- determining the minima of the course of the mean difference of the sequence numbers;
- determining the minima of the temporal course of the mean difference in time at least in the proximity of the minima of the course of the mean difference of the sequence numbers;
- determining a point in time Minleft before and a point in time Minright after the point in time (t*) of the earliest acknowledgement received by the probe, and for which the minimum of the mean difference in time is nearest to the minimum of the mean difference of the sequence numbers.

**17.** Method according to-claim 16,
**characterized in that**
the round trip time probe-sender (RTTps) and the round trip time probe-receiver (RTTpr) are determined according to:

$$RTTps = Minright - t^*$$

$$RTTpr = t^* - Minleft.$$

**18.** Device comprising means designed to carry out each of the steps of the method according to one of claims 1 to 17.

**Patentansprüche**

**1.** Verfahren für die nicht-invasive Abschätzung der Umlaufzeit (RTT) in einem paketorientierten Übertragungssystem auf Bestätigungsbasis mittels einer Sonde, die die Signale überwacht, die zwischen einem Sender und einem Empfänger übertragen werden, mit den folgenden Schritten:

a) für eine vorgebbare Anzahl von nachfolgenden Bestätigungen innerhalb eines Zeitintervalls (Wack)

a1) Vergleichen der Zeitstempel der Sequenz von Bestätigungen mit den Zeitstempeln der von der Sonde empfangenen Pakete vor den Bestätigungen, um einen abgeschätzten Wert für die Sonden-Empfänger-Umlaufzeit (RTTpr) zu bestimmen;
a2) Vergleichen der Zeitstempel der Sequenz von Bestätigungen mit den Zeitstempeln der von der Sonde empfangenen Pakete nach den Bestätigungen, um einen abgeschätzten Wert für die Sonden-Sender-Umlaufzeit (RTTps) zu bestimmen;

b) Addieren der abgeschätzten Werte für die Sonden-Empfänger-Umlaufzeit und die Sonden-Sender-Umlaufzeit zur Bestimmung eines abgeschätzten Werts für die Umlaufzeit (RTT).

**2.** Verfahren nach Anspruch 1,
**dadurch gekennzeichnet, dass**
in Schritt a1) der Zeitraum der Pakete, von welchem Zeitraum die Zeitstempel zum Vergleich verwendet werden, durch den Zeitpunkt der frühesten Bestätigung der Anzahl von Bestätigungen minus einer maximalen Umlaufzeit (RTTmax) definiert ist.

**3.** Verfahren nach Anspruch 1 oder 2,
**dadurch gekennzeichnet, dass**
in Schritt a2) der Zeitraum der Pakete, von welchem Zeitraum die Zeitstempel zum Vergleich verwendet werden, durch den Zeitpunkt der frühesten Bestätigung der Anzahl von Bestätigungen plus dem Zeitraum der Bestätigungen (Wack) plus einer maximalen Umlaufzeit (RTTmax) definiert ist.

4. Verfahren nach Anspruch 2 oder 3,
**dadurch gekennzeichnet, dass**
in den Schritten a1) oder a2) betrachtete Zeitintervall in n diskrete Zeitpunkte gruppiert wird, die mit einer Auflösung (ris) beabstandet sind, und die folgende Berechnung durchgeführt wird:

c1 Auffinden des Pakets, das zeitlich am nächsten zur Bestätigung liegt, für eine erste im Zeitintervall vorhandene Bestätigung;
c2 Berechnen der Zeitdifferenz, insbesondere des Absolutwerts dieser Differenz, zwischen dieser Bestätigung und dem entsprechenden nächsten Paket;
c3 Durchführen desseben für alle Bestätigungen im Zeitintervall und Erzeugen der mittleren Zeitdifferenz oder eines damit korrelierten Werts;
c4 Bewegen der Zeitstempel der betrachteten Bestätigungen, Vergrößern oder Verkleinern derselben mit dem Auflösungsschritt (ris) und Wiederholen der Schritte c1 bis c3, bis irgendeiner der bewegten Zeitstempel der Bestätigungen, die im Zeitintervall (Wack) enthalten sind, das Ende des in den Schritten a1) oder a2) betrachteten Zeitintervalls erreicht;
c5 Suchen nach dem Zeitpunkt (t1 = i1 * ris), für den die mittlere Zeitdifferenz oder der damit korrelierte Wert minimal geworden ist.

5. Verfahren nach Anspruch 4,
**dadurch gekennzeichnet, dass**
das betrachtete Zeitintervall der Zeitraum zwischen dem Zeitpunkt der frühesten Bestätigung (t*) und dem Zeitpunkt der frühesten Bestätigung (t*) plus der maximalen Umlaufzeit (RTTmax) plus dem Zeitintervall (Wack) ist, in dem sich die Bestätigungen befinden, und die Sonden-Sender-Umlaufzeit (RTTps) gemäß: RTTps = i1 * ris berechnet wird.

6. Verfahren nach Anspruch 4 oder 5,
**dadurch gekennzeichnet, dass**
das betrachtete Zeitintervall der Zeitraum zwischen dem Zeitpunkt der frühesten Bestätigung (t*) und dem Zeitpunkt der frühesten Bestätigung (t*) minus der maximalen Umlaufzeit (RTTmax) ist, und die Sonden-Empfänger-Umlaufzeit (RTTpr) gemäß: RTTpr = i1 * ris berechnet wird.

7. Verfahren nach einem der Ansprüche 4 bis 6,
**dadurch gekennzeichnet, dass**
es ferner die folgenden Schritte umfasst:

- Bestimmen der Sequenznummern der Pakete und der Sequenznummern der Bestätigungen und ferner Durchführen der folgenden Berechnung:

d1 Auffinden des Pakets, das zeitlich am nächsten zur Bestätigung liegt, für eine erste Bestätigung;
d2 Berechnen der Differenz zwischen der Sequenznummer dieser Bestätigung und der Sequenznummer des entsprechenden nächsten Pakets, insbesondere des Absolutwerts dieser Differenz;
d3 Durchführen desselben für alle Bestätigungen im Zeitintervall (Wack) und Erzeugen der mittleren Differenz der Sequenznummern oder eines damit korrelierten Werts;
d4 Bewegen der Zeitstempel der betrachteten Bestätigungen, Vergrößern oder Verkleinern derselben mit dem Auflösungsschritt (ris) und Wiederholen der Schritte d1 bis d3, bis irgendeiner der bewegten Zeitstempel der Bestätigungen, die im Zeitintervall (Wack) enthalten sind, das Ende des in den Schritten a1) oder a2) betrachteten Zeitintervalls erreicht;
d5 Suchen nach dem Zeitpunkt (t2 = i2 * ris), für den die mittlere Differenz der Sequenznummern oder eines damit korrelierten Werts minimal geworden ist.

8. Verfahren nach Anspruch 7,
**dadurch gekennzeichnet, dass**,
wenn die Differenz erzeugt wird, das abgeschätzte Gleitfenster betrachtet wird.

9. Verfahren nach Anspruch 8,
**dadurch gekennzeichnet, dass**
die untere Grenze für das abgeschätzte Gleitfenster das scheinbare Fenster ist, wobei das scheinbare Fenster der Anzahl von Paketen entspricht, für die eine Bestätigung an der Sonde noch nicht überwacht wurde.

**10.** Verfahren nach Anspruch 8,
**dadurch gekennzeichnet, dass**
die untere Grenze für das abgeschätzte Gleitfenster auf 1 Paket gesetzt wird, insbesondere wenn ein Paketverlust erfasst wird.

**11.** Verfahren nach einem der Ansprüche 8 bis 10,
**dadurch gekennzeichnet, dass**
das abgeschätzte Gleitfenster im Fall eines Paketverlusts folgendermaßen berechnet wird:

$$cwnd(t+1) = cwnd(t)/2$$

wobei cwnd(t) das abgeschätzte Gleitfenster zur Zeit t ist.

**12.** Verfahren nach einem der Ansprüche 8 bis 11,
**dadurch gekennzeichnet, dass**
das abgeschätzte Gleitfenster im Fall des Empfangs von Bestätigungen mit neuen Sequenznummern folgendermaßen berechnet wird:

$$cwnd(t+1)=cwnd(t) + 1/cwnd(t)$$

wobei cwnd(t) das abgeschätzte Gleitfenster zur Zeit t ist.

**13.** Verfahren nach einem der Ansprüche 11 oder 12,
**dadurch gekennzeichnet, dass**
das abgeschätzte Gleitfenster auf das angezeigte Fenster begrenzt wird, falls die Gleichung gemäß Anspruch 10 oder 11 einen höheren Wert ergibt als für das angezeigte Fenster, wobei das angezeigte Fenster als Konfigurationsparameter vorgegeben werden kann.

**14.** Verfahren nach einem der Ansprüche 8 bis 13,
**dadurch gekennzeichnet, dass**
am Beginn einer Verbindung das Gleitfenster für jede empfangene Bestätigung verdoppelt wird.

**15.** Verfahren nach Anspruch 14, **dadurch gekennzeichnet, dass**
die Verdoppelung stattfindet, bis ein Paketverlust erfasst wird.

**16.** Verfahren nach einem der vorangehenden Ansprüche,
**dadurch gekennzeichnet, dass**
die folgenden Schritte für sowohl für den Zeitraum vor als auch den Zeitraum nach dem Zeitpunkt der frühesten von der Sonde empfangenen Bestätigung ausgeführt werden:

- Bestimmen der Minima des Verlaufs der mittleren Differenz der Sequenznummern; '
- Bestimmen der Minima des zeitlichen Verlaufs der mittleren Zeitdifferenz zumindest in der Nähe der Minima des Verlaufs der mittleren Differenz der Sequenznummern;
- Bestimmen eines Zeitpunkts Minleft vor und eines Zeitpunkts Minright nach dem Zeitpunkt (t*) der frühesten von der Sonde empfangenen Bestätigung, für welche das Minimum der mittleren Zeitdifferenz am nächsten zum Minimum der mittleren Differenz der Sequenznummern liegt.

**17.** Verfahren nach Anspruch 16,
**dadurch gekennzeichnet, dass**
die Sonden-Sender-Umlaufzeit (RTTps) und die Sonden-Empfänger-Umlaufzeit (RTTpr) bestimmt werden gemäß:

$$RTTps = Minright - t^*$$

$$RTTpr = t^* - Minleft.$$

**18.** Vorrichtung mit einer Einrichtung, die dazu ausgelegt ist, jeden der Schritte des Verfahrens nach einem der Ansprüche 1 bis 17 auszuführen.

## Revendications

**1.** Méthode d'estimation non invasive du round trip time (RTT, temps d'aller-retour) d'un système de transmission à contrôle de flux basé sur l'acquittement et orienté paquets, au moyen d'un sondage surveillant les signaux transmis entre un émetteur et un récepteur, comprenant les étapes suivantes :

a) pour un nombre préréglable d'acquittements successifs pendant un intervalle de temps (Wack) :

a1) comparaison des tampons horaires de la séquence d'acquittements aux tampons horaires des paquets reçus par le sondage avant les acquittements pour déterminer une valeur estimée pour le récepteur de sondage de round trip time (round trip time probe-receiver, RTTpr) ;
a2) comparaison des tampons horaires de la séquence d'acquittements aux tampons horaires des paquets reçus par le sondage après les acquittements pour déterminer une valeur estimée pour l'émetteur de sondage de round trip time (round trip time probe-sender, RTTps) ;

b) addition des valeurs estimées pour le récepteur de sondage de round trip time et de l'émetteur de sondage de round trip time pour la détermination d'une valeur estimée du round trip time (RTT).

**2.** Méthode selon la revendication 1,
**caractérisée en ce que**,
à l'étape a1), la période des paquets, période dont les tampons horaires sont utilisés pour la comparaison, est définie par l'instant d'acquittement le plus précoce de la quantité d'acquittements moins un round trip time maximal (RTTmax).

**3.** Méthode selon la revendication 1 ou 2,
**caractérisée en ce que**
à l'étape a2), la période des paquets, période dont les tampons horaires sont utilisés pour la comparaison, est définie par l'instant d'acquittement le plus précoce de la quantité d'acquittements plus la période des acquittements (Wack) plus un round trip time maximal (RTTmax).

**4.** Méthode selon la revendication 2 ou 3,
**caractérisée en ce que**
l'intervalle de temps considéré à l'étape a1) ou a2) est groupé en n temps discrets, espacés d'une résolution (ris) et réalisant le calcul suivant :

c1 trouver le paquet le plus proche de l'acquittement pour un premier acquittement présent dans l'intervalle de temps ;
c2 calculer la différence de temps, tout spécialement la valeur absolue de cette différence, entre cet acquittement et le paquet le plus proche correspondant ;
c3 appliquer ceci à tous les acquittements de l'intervalle de temps et créer la différence moyenne en temps ou une valeur corrélée avec celle-ci;
c4 déplacer les tampons horaires des acquittements considérés en les augmentant ou en les diminuant avec le pas de résolution (ris) et répéter les étapes c1 à c3 jusqu'à ce qu'un des tampons horaires déplacés des acquittements contenus dans l'intervalle de temps (Wack) atteigne la fin de l'intervalle de temps considéré à l'étape a1) ou a2);
c5 chercher le temps (t1 = i1 * ris) pour lequel la différence moyenne en temps ou la valeur corrélée à celle-ci est devenue minimale.

**5.** Méthode selon la revendication 4,
**caractérisée en ce que**

l'intervalle de temps considéré est la période entre l'instant d'acquittement le plus précoce (t*) et l'instant d'acquittement le plus précoce (t*) plus le temps maximal de round trip (RTTmax) plus l'intervalle de temps (Wack) dans lequel sont situés les acquittements, et l'émetteur de sondage de round trip time (RTTps) est calculé par : RTTps = i1 * ris.

**6.** Méthode selon la revendication 4 ou 5,
**caractérisée en ce que**
l'intervalle de temps considéré est la période entre l'instant d'acquittement le plus précoce (t*) et l'instant d'acquittement le plus précoce (t*) moins le temps maximal de round trip (RTTmax), et le récepteur de sondage de round trip time (RTTpr) est calculé par :

$$RTTpr = i1 * ris.$$

**7.** Méthode selon l'une quelconque des revendications 4 à 6,
**caractérisée en ce que**
elle comprend en outre les étapes suivantes :

- déterminer les numéros de séquence des paquets et les numéros de séquence des acquittements et réaliser, en outre, le calcul suivant :

  d1 trouver le paquet le plus proche dans le temps de l'acquittement pour un premier acquittement ;
  d2 calculer la différence entre le numéro de séquence de cet acquittement et le numéro de séquence du paquet le plus proche correspondant, tout spécialement la valeur absolue de cette différence ;
  d3 faire cela pour tous les acquittements de l'intervalle de temps (Wack) et créer la différence moyenne en temps des numéros de séquence ou une valeur corrélée avec celle-ci ;
  d4 déplacer les tampons horaires des acquittements considérés en les augmentant ou en les diminuant avec le pas de résolution (ris) et répéter les étapes d1 à d3 jusqu'à ce qu'un des tampons horaires déplacés des acquittements contenus dans l'intervalle de temps (Wack) atteigne la fin de l'intervalle de temps considéré à l'étape a1) ou a2) ;
  d5 chercher le temps (t2 = i2 * ris) pour lequel la différence moyenne des numéros de séquence ou la valeur corrélée à celle-ci est devenue minimale.

**8.** Méthode selon la revendication 7,
**caractérisée en ce que**
la fenêtre glissante estimée est considérée à la création de la différence.

**9.** Méthode selon la revendication 8,
**caractérisée en ce que**
la limite inférieure de la fenêtre glissante estimée est la fenêtre apparente, la fenêtre apparente correspondant au nombre de paquets pour lesquels un acquittement n'a pas encore été traité au sondage.

**10.** Méthode selon la revendication 8,
**caractérisée en ce que**
la limite inférieure de la fenêtre glissante est réglée à 1 paquet, en particulier si une perte de paquet est détectée.

**11.** Méthode selon l'une quelconque des revendications 8 à 10,
**caractérisée en ce que**
la fenêtre glissante estimée est calculée comme suit dans le cas d'une perte de paquet :

$$cwnd\ (t + 1) = cwnd\ (t)\ /\ 2$$

où cwnd (t) est la fenêtre glissante estimée au temps t.

**12.** Méthode selon l'une quelconque des revendications 8 à 11,
**caractérisée en ce que**

la fenêtre glissante estimée est calculée comme suit dans le cas de la réception d'acquittements avec de nouveaux numéros de séquence :

$$cwnd\ (t + 1) = cwnd\ (t) + 1 / cwnd\ (t)$$

où cwnd (t) est la fenêtre glissante estimée au temps t.

**13.** Méthode selon l'une quelconque des revendications 11 ou 12,
**caractérisée en ce que**
la fenêtre glissante estimée est coupée à la taille de la fenêtre advertised window dans le cas où l'équation selon la revendication 10 ou 11 se traduit par une valeur plus grande que celle de la fenêtre advertised window, ce par quoi la fenêtre advertised window peut être préréglée par paramètre de configuration.

**14.** Méthode selon l'une quelconque des revendications 8 à 13,
**caractérisée en ce que**,
au début de la connexion, la fenêtre glissante est doublée pour chaque acquittement reçu.

**15.** Méthode selon la revendication 14,
**caractérisée en ce que**
le doublement s'effectue jusqu'à ce qu'une perte de paquet soit détectée.

**16.** Méthode selon l'une quelconque des revendications précédentes,
**caractérisée en ce que**
les étapes suivantes sont parcourues à la fois pour la période avant et la période après l'instant d'acquittement le plus précoce reçu par le sondage:

- déterminer les minima de l'évolution de la différence moyenne des numéros de séquence ;
- déterminer les minima de l'évolution dans le temps de la différence moyenne en temps au moins à proximité des minima de l'évolution de la différence moyenne des numéros de séquence;
- déterminer un temps Minleft avant et un temps Minright après le temps (t*) de l'acquittement le plus précoce reçu par le sondage et pour lequel le minimum de la différence moyenne en temps est le plus proche du minimum de la différence moyenne de numéros de séquence.

**17.** Méthode selon la revendication 16,
**caractérisée en ce que**
l'émetteur de sondage de round trip time (RTTps) et le récepteur de sondage de round trip time (RTTpr) sont déterminés par :

$$RTTps = Minright - t^*$$

$$RTTpr = t^* - Minleft$$

**18.** Dispositif comprenant un moyen pour appliquer chacune des étapes de la méthode selon l'une quelconque des revendications 1 à 17.

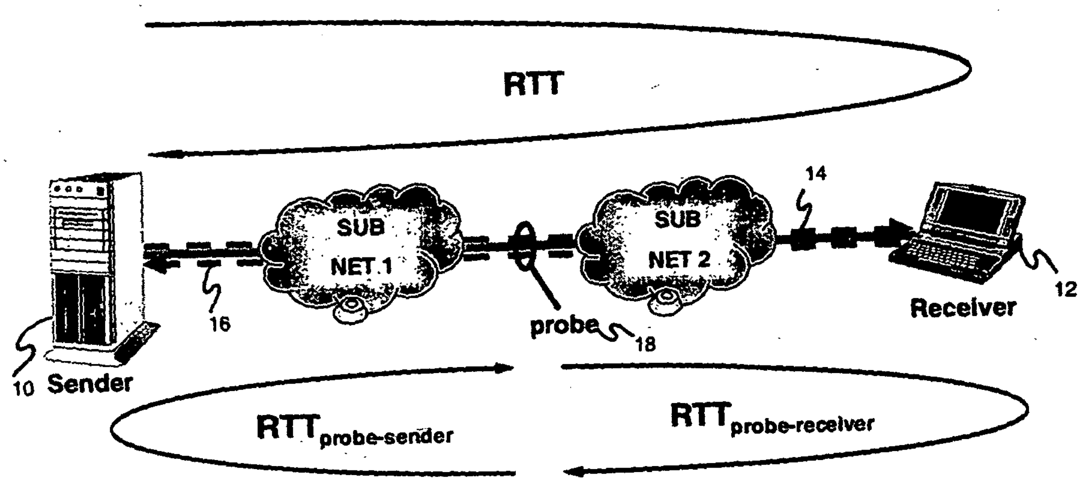
RTT
SUB
NET 1
SUB
NET 2
14
16
12
Receiver
probe
18
10 Sender
RTT$_{probe-sender}$
RTT$_{probe-receiver}$

Fig. 1

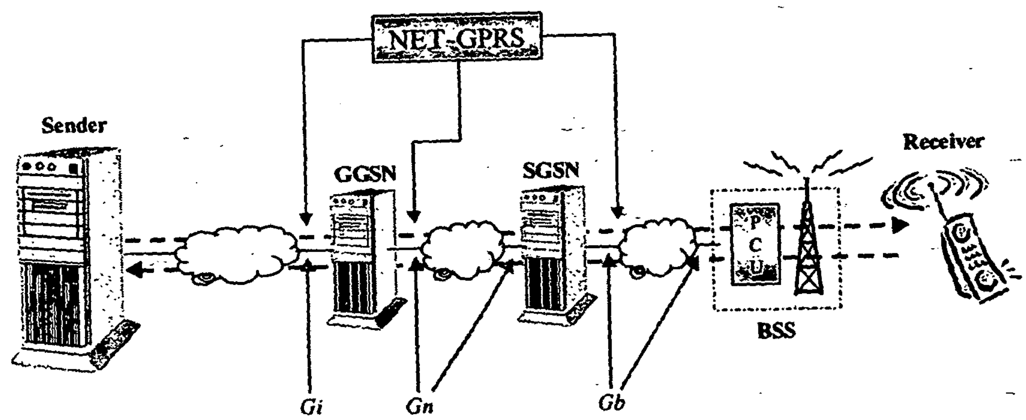
NET-GPRS
Sender
GGSN
SGSN
Receiver
P
C
U
BSS
Gi
Gn
Gb

Fig. 2

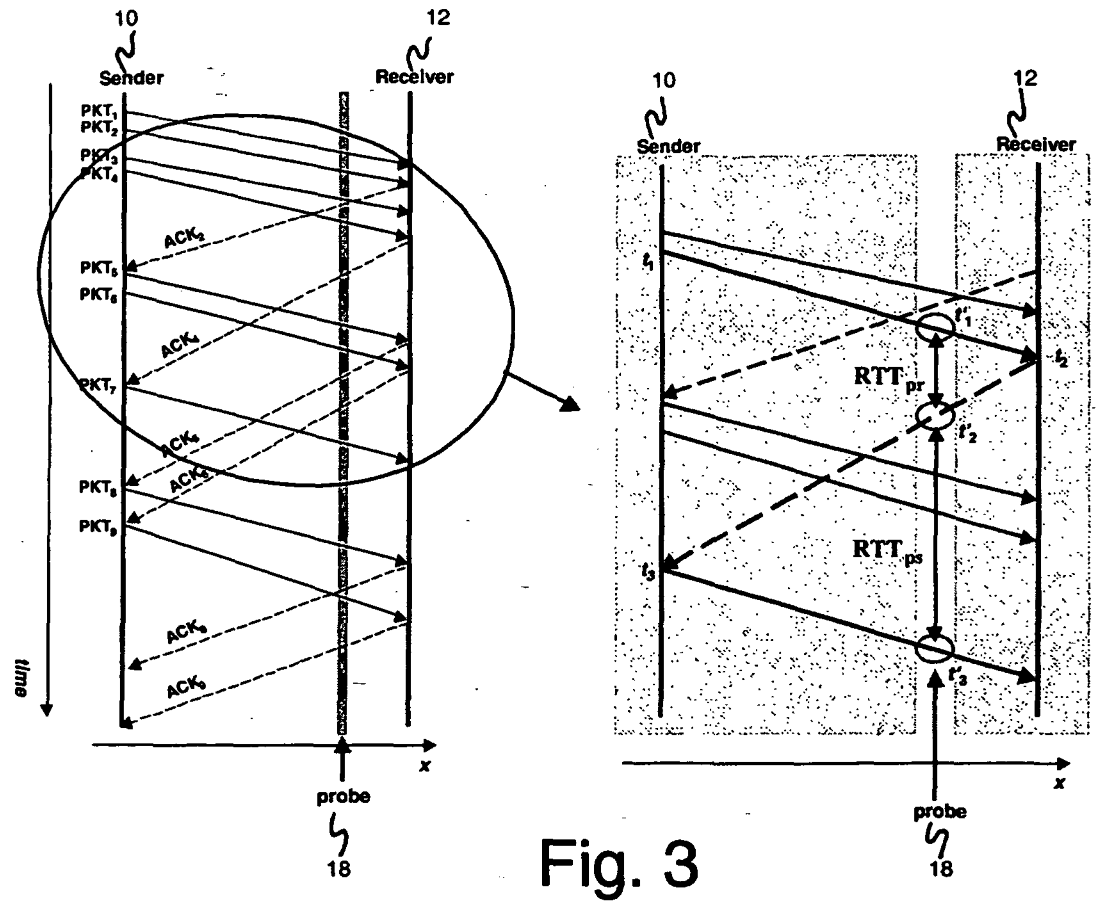
10
Sender
12
Receiver
PKT1
PKT2
PKT3
PKT4
ACK2
PKT5
PKT6
ACK4
PKT7
ACK6
ACK5
PKT8
PKT9
ACK8
ACK9
time
x
probe
18
10
Sender
12
Receiver
t1
t'1
t2
RTTpr
t'2
RTTps
t3
t'3
x
probe
18

Fig. 3

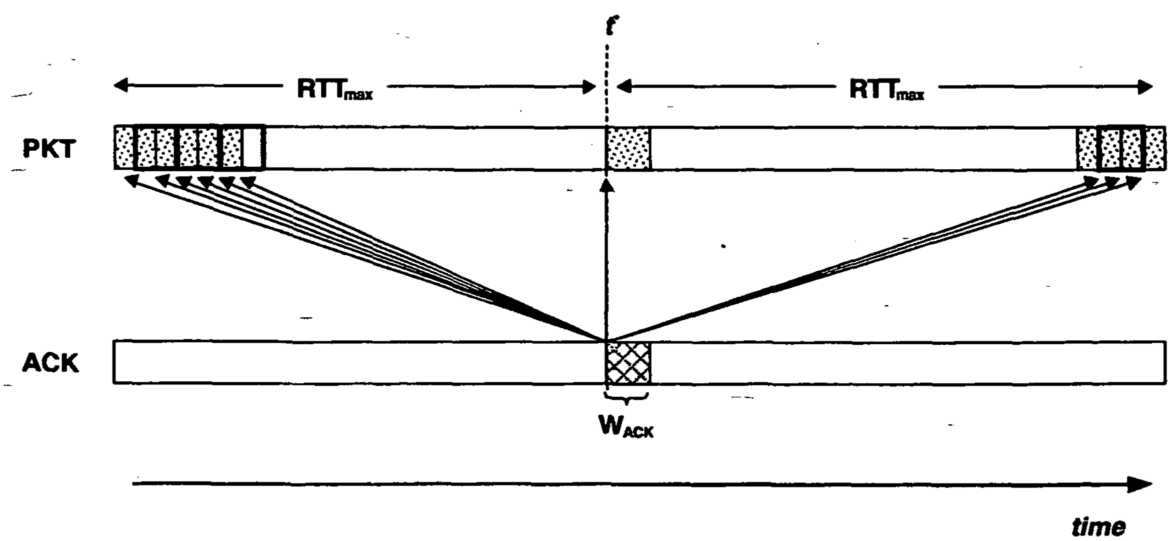
t'
RTTmax
RTTmax
PKT
ACK
WACK
time

Fig. 4

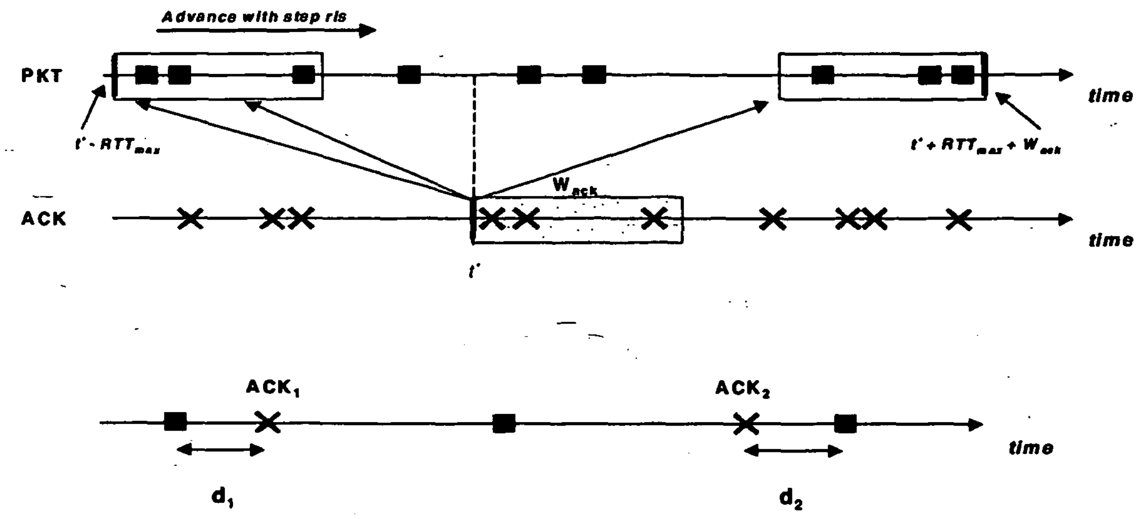
Advance with step rls
PKT
time
t' - RTT_max
t' + RTT_max + W_ack
W_ack
ACK
time
t'
ACK1
ACK2
time
d1
d2

Fig. 5

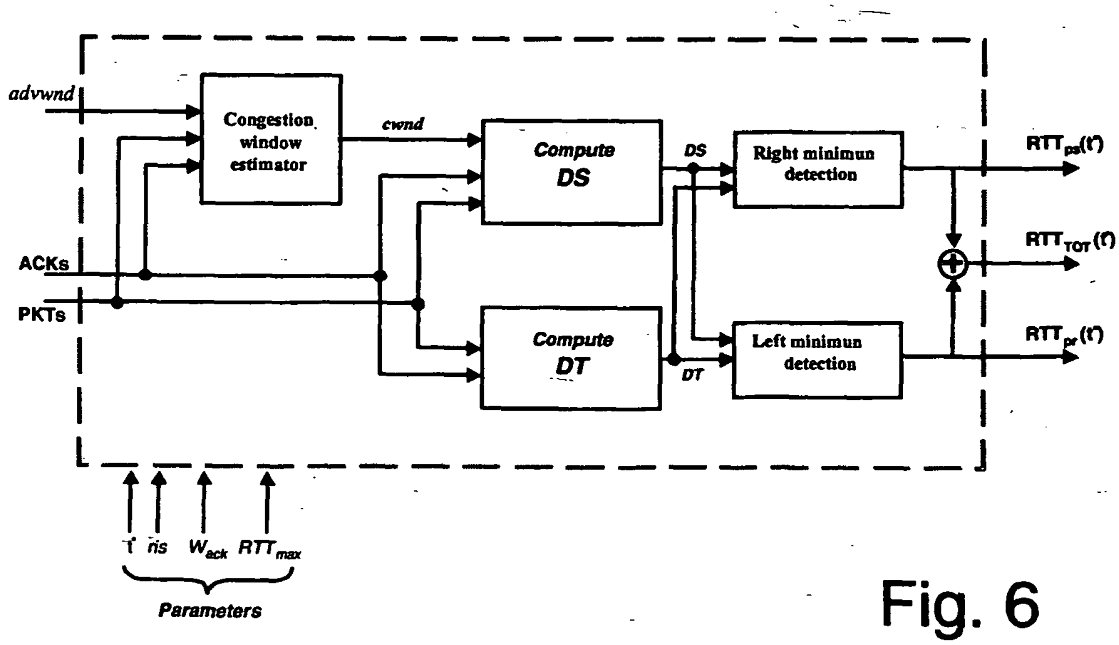
advwnd
Congestion window estimator
cwnd
Compute DS
DS
Right minimun detection
RTT_ps(t')
RTT_TOT(t')
ACKs
PKTs
Compute DT
DT
Left minimun detection
RTT_pr(t')
t' rls W_ack RTT_max
Parameters

Fig. 6

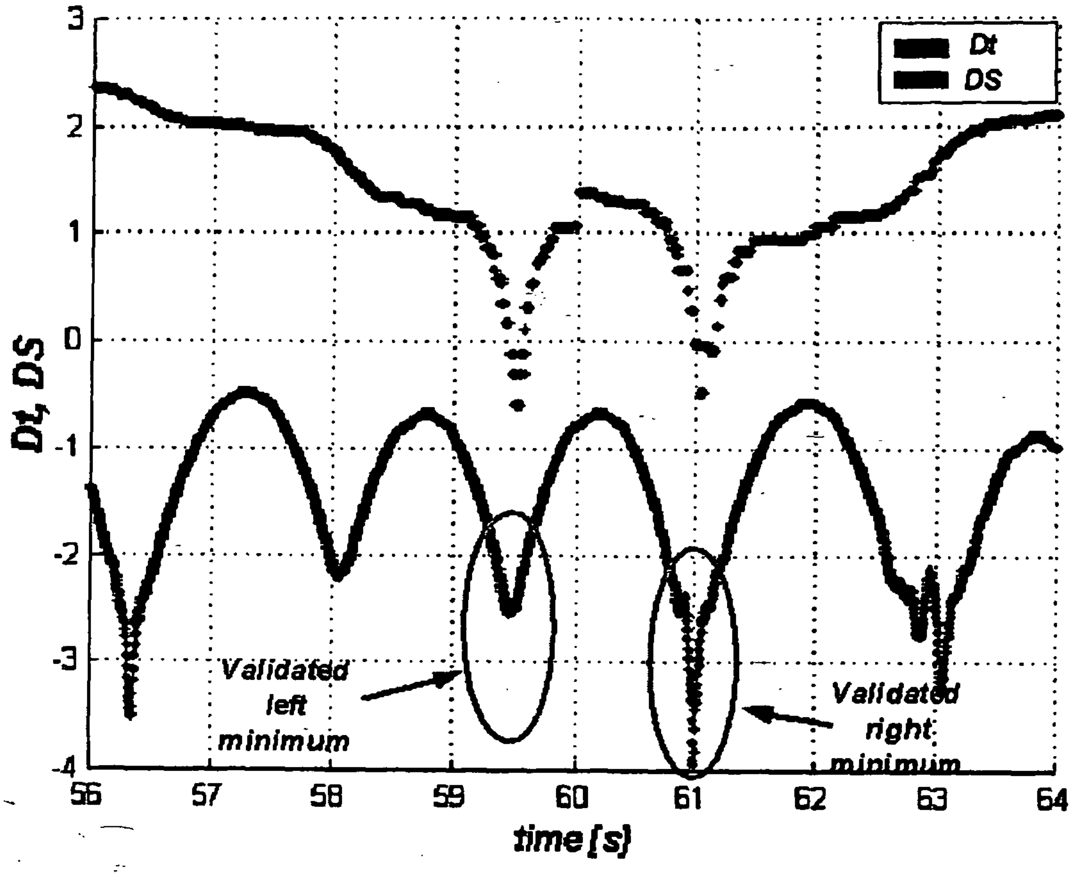
3
2
1
0
-1
-2
-3
-4
Dt, DS
Dt
DS
Validated
left
minimum
Validated
right
minimum
56
57
58
59
60
61
62
63
64
time [s]

Fig. 7

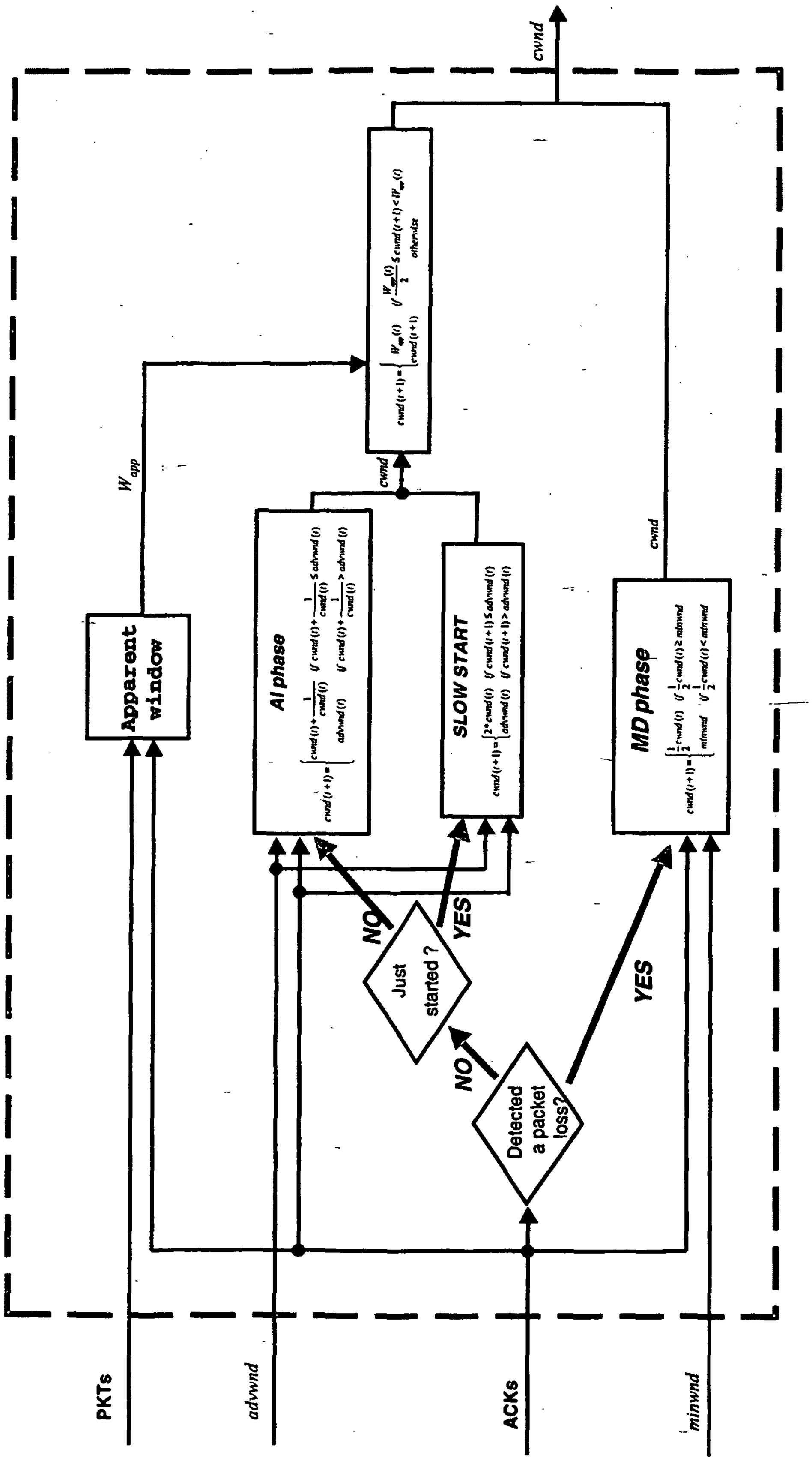
PKTs
advwnd
ACKs
minwnd
Apparent window
$W_{app}$
AI phase
SLOW START
MD phase
Just started ?
Detected a packet loss?
NO
YES
NO
YES
cwnd
cwnd
cwnd

Fig. 8